# EUROPÄISCHE PATENTSCHRIFT

(11) **EP 0 649 501 B1**
(45) Veröffentlichungstag und Bekanntmachung des Hinweises auf die Patenterteilung: **14.10.1998**
(21) Anmeldenummer: 93912570.4
(22) Anmeldetag: 08.06.1993
(51) Int. Cl.: F15C 5/00

(54) **MIKROVENTIL**
MICROVALVE
MICRO-SOUPAPE

(30) Priorität: 26.06.1992 DE 4221089
(43) Veröffentlichungstag der Anmeldung: 26.04.1995
(73) Patentinhaber: ROBERT BOSCH GMBH, 70442 Stuttgart (DE)
(72) Erfinder: METTNER, Michael, D-7140 Ludwigsburg (DE); SCHUELKE, Armin, D-7141 Schwieberdingen (DE); DOERING, Christian, D-7000 Stuttgart 80 (DE); SCHITTNY, Thomas, D-7141 Steinheim (DE)
(86) Internationale Anmeldenummer: DE9300493
(87) Internationale Veröffentlichungsnummer: WO9400696

(56) Entgegenhaltungen:
- WO-A-91/02169
- DE-A- 2 034 467
- DE-A- 2 039 133
- FR-A- 1 395 241

## Beschreibung

### Stand der Technik

Die Erfindung geht aus von einem Mikroventil aus übereinander angeordneten, miteinander verbundenen Schichten nach der Gattung des Anspruchs 1 und betrifft weiterhin eine Ventilanordnung mit mindestens zwei parallel geschalteten Mikroventilen nach der Gattung des Anspruchs 18.

Derartige Mikroventile werden zumeist aus Halbleiterschichten zusammengesetzt, die zur dauerhaften Verbindung gebondet werden. Die einzelnen Halbleiterschichten werden durch aufwendige Ätzverfahren in die funktionsnotwendige Form und Struktur gebracht. Ein derartiges Mikroventil ist beispielsweise in der WO 90/15933 beschrieben. Solche Mikroventile sind aufgrund des teuren Schichtmaterials bzw. der aufwendigen Herstellungsprozesse relativ teuer. Aufgrund der sehr aufwendigen Fertigungstechnik müssen die Ventile in sehr großen Stückzahlen gefertigt werden, um eine ausreichende Preiswürdigkeit zu erreichen. Anpassungen oder Differenzierungen dieser Mikroventile bei der Herstellung sind nur mit erheblichem Aufwand durchzuführen.

### Vorteile der Erfindung

Das erfindungsgemäße Mikroventil mit den kennzeichnenden Merkmalen des Hauptanspruchs zeichnet sich durch einen einfachen Aufbau aus und ist dadurch kostengünstig herstellbar. Der Aufbau ist so gewählt, daß das Ventil mit einer sehr geringen Anzahl einzelner Elemente zusammengesetzt werden kann, so daß die Verbindungsverfahren auf ein Minimum reduziert werden und somit die mit diesen Verbindungsverfahren zusammenhängenden Fehler und Aufwendungen ebenfalls verringert werden.

Bei der Herstellung des Ventils wird insbesondere das Mittelteil durch einen Kunststofformprozeß - insbesondere Spritzgießen oder Prägen - hergestellt und damit durch einen Form- oder Strukturierungsprozeß, der bei geringem Aufwand ein hohes Maß an Genauigkeit und Wiederholbarkeit aufweist. Abwandlungen und Anpassungen sind durch einen modularen Aufbau eines oder mehrerer Ventile mit relativ geringem Aufwand möglich.

Bei diesem Herstellungsverfahren können darüberhinaus differenzierte Anforderungen im Hinblick auf das Material bzw. unterschiedliche Materialkomponenten, Zusammensetzungen oder Schichtungen erfüllt werden.

Die Ventilanordnung nach Anspruch 18 hat den Vorteil, daß durch den modularen Aufbau und die Parallelschaltung mehrerer Mikroventile leicht Anpassungen des Volumenstroms vorgenommen werden können. Die Ventilanordnung kann auf einfache Weise an unterschiedliche Volumenanforderungen angepaßt werden. Durch unterschiedliche Bestückung in Art und Zahl der Mikroventileinheiten ist darüberhinaus auf fertigungstechnisch einfache und kostengünstige Weise eine Variantenvielfalt bei geringer Bauteilvielfalt zu erreichen.

In der DE-OS 20 34 467 ist ein Ventil dargestellt, das aus mehreren ringscheibenförmigen Elementen und mit einer Vielzahl von ringförmigen Vertiefungen aufgebaut ist. Dieses Bauelement kann nicht in einem Formprozeß hergestellt werden.

Weitere Vorteile und vorteilhafte Weiterbildungen ergeben sich aus der Beschreibung und den Unteransprüchen.

### Zeichnung

Die Erfindung wird anhand der nachfolgenden Beschreibung und Zeichnung näher erläutert. Letztere zeigt
in Figur 1 einen Schnitt durch ein Mikroventil in vereinfachter Darstellung,
in Figur 2 einen Schnitt durch ein zweites Ausführungsbeispiel des Mikroventils,
in Figur 3 ein Detail dieses zweiten Ausführungsbeispiels,
in den Figuren 4 und 5 ein drittes und viertes Ausführungsbeispiel,
in Figur 6 in der linken Bildhälfte eine erste und in der rechten Bildhälfte eine zweite Abwandlung des Mikroventils nach Figur 5,
in Figur 6a eine Draufsicht auf die geöffnete erste Abwandlung
in Figur 7 in der linken und rechten Bildhälfte jeweils unterschiedliche Abwandlungen des erfindungsgemäßen Mikroventils
in den Figuren 8 und 9 in deren linken und rechten Bildhälften jeweils weitere Abwandlungen des Mikroventils
in Figur 10 eine geschnittene, perspektivische Darstellung einer Mikroventilanordnung mit parallel geschalteten Mikroventilen.

### Beschreibung der Ausführungsbeispiele

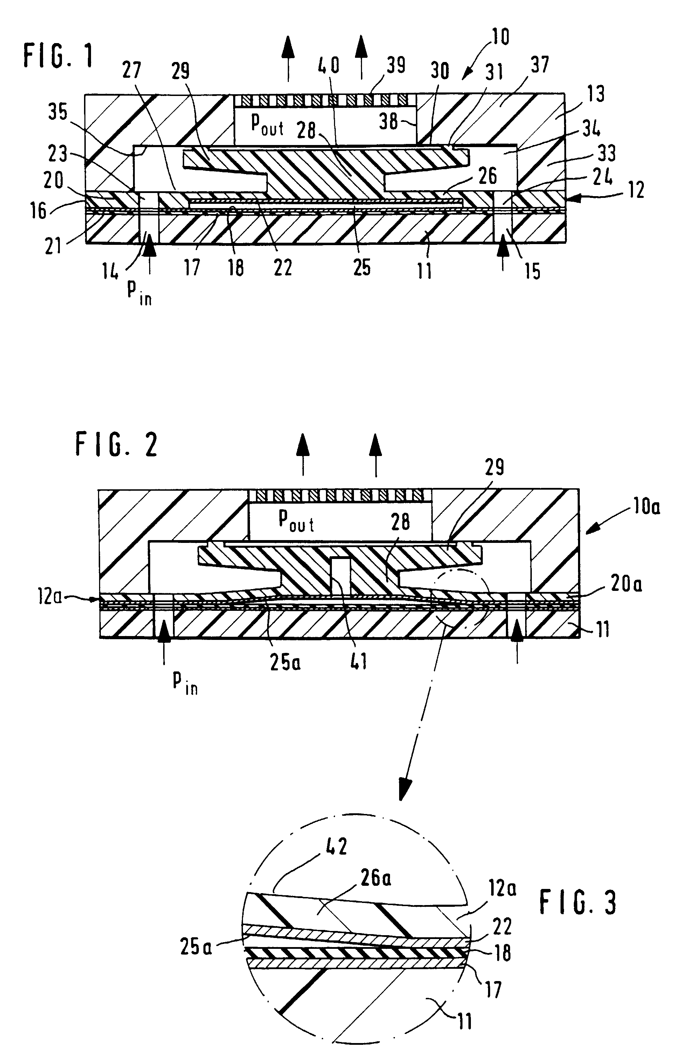

Das in Figur 1 dargestellte Mikroventil 10 ist aus drei schichtförmig aufeinandergesetzten Bauteilen zusammengefügt, einem Unterteil 11, einem Mittelteil 12 und einem Oberteil 13. Das Unterteil 11 besteht aus einem Kunststoffmaterial oder aus Aluminium und ist als zylindrische Scheibe ausgebildet. In Achsrichtung wird es von zwei durchgehenden Kanälen 14, 15 durchdrungen, die der Zufuhr von Druckmittel dienen. Es ist jedoch auch möglich, die Druckmittelzufuhr über einen einzigen oder über mehrere Kanäle erfolgen zu lassen. Auf die Oberseite 16 des Unterteils 11 ist eine elektrisch leitende Schicht 17 aufgebracht, die wiederum von einer isolierenden Schicht 18 überdeckt ist. Ist das Unterteil 11 aus einem elektrisch leitenden Material gefertigt, ist eine zusätzliche - hier nicht dargestellte - Isolierschicht zwischen der elektrisch leitenden Schicht 17 und dem Unterteil angeordnet.

Das Mittelteil 12 hat eine zylindrische Grundplatte 20, deren Abmessungen denen des Unterteils 11 entsprechen und die auf dieses aufgesetzt ist. Auf die Unterseite 21 der Grundplatte 20 ist eine elektrisch leitende Schicht 22 aufgebracht, die im zusammengebauten Zustand des Mikroventils 10 durch die isolierende Schicht 18 von der elektrisch leitenden Schicht 17 des Unterteils 11 getrennt ist. Unterteil 11 und Mittelteil 12 sind durch Kleben oder Schweißen fest und dauerhaft miteinander verbunden. Die elektrisch leitenden Schichten 17 und 22 sind dabei auf nicht dargestellte Weise mit Zuleitungen verbunden, die über Schaltvorrichtungen mit einer Spannungsquelle verbindbar sind.

Die Grundplatte 20 des Mittelteils 12 weist ebenfalls zwei Kanäle 23, 24 auf, die mit den Kanälen 14, 15 des Unterteils 11 fluchten. Bei abgewandelter Ausbildung des Unterteils 11 sind diese Kanäle entsprechend angepaßt. In die Unterseite 21 des Mittelteils 12 ist eine flache, zylindrische Vertiefung 25 eingelassen, deren Durchmesser geringer als der Abstand der Kanäle 23, 24 ist. Die Vertiefung 25 ist ebenfalls durch die elektrisch leitende Schicht 22 bedeckt und so bemessen, daß die Grundplatte 20 in diesem Bereich als Membran 26 ausgebildet ist. Die Vertiefung 25 kann jedoch auch eine andere Querschnittsform als die eines Kreises haben, zum Beispiel die eines Quadrates oder eines Sechseckes, und ist vorteilhafterweise ganzzahlig axialsymmetrisch. Auch das Oberteil 13, die Grundplatte 20 und das Unterteil 11 können nicht nur zylindrisch sondern auch entsprechend axialsymmetrisch ausgebildet werden.

Auf der Oberseite 27 der Grundplatte 20 ist ein zylinderförmiger (axialsymmetrischer) Fortsatz 28 ausgebildet, dessen Abmessungen geringer sind als die der Vertiefung 25. Dieser Fortsatz 28 weitet sich auf der der Grundplatte 20 gegenüberliegenden Seite in einen flachen, kegelstumpfförmigen Ventilteller 29 auf. Dieser hat auf seiner freien Stirnseite 30 einen ringförmigen Dichtkranz 31, der als Schließglied des Mikroventils dient.

Auf die Oberseite 27 der Grundplatte 20 ist der ringförmige Rand 33 des topfförmigen Oberteils 13 aufgesetzt. Der Innenraum 34 des Oberteils 13 ist so bemessen, daß sein Durchmesser größer ist als der Abstand der Kanäle 23, 24. Die Höhe des Innenraumes 34 ist so bemessen, daß der Dichtkranz 31 an der Innenseite 35 des Bodenteils 37 des Oberteils 13 anliegt. Das Bodenteil 37 wird von einem Auslaßkanal 38 durchdrungen, der innerhalb des durch den Dichtkranz 31 begrenzten Bereiches 40 in den Innenraum 34 mündet. Dieser durch den Dichtkranz 31 begrenzte Bereich 40 des Oberteils 13 dient als Ventilsitz, der mit dem als Schließglied dienenden Dichtkranz 31 zusammenwirkt. In den Auslaßkanal 38 ist zur Beeinflussung des Ausströmverhaltens des Druckmediums eine Düsenplatte 39 eingepasst. Diese kann jedoch auch integriert sein.

Das beschriebene Mikroventil 10 eignet sich für viele Anwendungen, beispielsweise als Kraftstoff-Einspritzventil in Kfz-Brennkraftmaschinen. Über die Kanäle 14 und 15 im Unterteil 11 und die Kanäle 23, 24 im Mittelteil 12 steht der Innenraum 34 mit einer Druckmittelquelle - beispielsweise einer Kraftstoffleitung - in Verbindung. Der Innenraum 34 ist im dargestellten Schaltzustand einseitig verschlossen, d.h. der als Schließglied dienende Dichtkranz 31 des Ventiltellers 29 liegt an der Innenseite 35 des Oberteils 13 bzw. des Bodenteils 37 an und verschließt den Auslaßkanal 38 (Ventilsitz). Die Vorspannung bzw. die Kraft, mit der der Ventilteller 29 bzw. der Dichtkranz 31 an die Innenseite 35 des Oberteils 13 gedrückt wird, ist abhängig von den elastischen Eigenschaften des Mittelteil-Materials bzw. von der Ausbildung der Membran 26 und vom Verhältnis von Innenraumhöhe zu den entsprechenden Abmessungen von Fortsatz 28 und Ventilteller 29 samt Dichtkranz 31. Die Membran 26 wirkt hier durch die Ausbildung und Anordnung des Fortsatzes 28 als Ringmembran und dient als Federmittel, das im neutralen Schaltzustand des Mikroventils das Schließglied (Dichtkranz 31) an den Ventilsitz (Innenseite 35 um Auslaßkanal 38 herum) drückt.

Werden über die nicht dargestellten Zuleitungen, die Schalteinrichtungen und die entsprechenden Verbindungen mit der Spannungsquelle die beiden elektrisch leitenden Schichten 17, 22 mit der Spannungsquelle so verbunden, daß die beiden Schichten unterschiedlich gepolt sind, wirken diese als Kondensator und im Bereich der Vertiefung 25 als Betätigungsmittel für das Mikroventil. Durch die Anziehungskräfte aufgrund der unterschiedlichen Polung der beiden Schichten (Elektroden eines elektrostatischen Antriebes) wölbt sich die Membran 26 im Bereich der Vertiefung 25 zum Unterteil 11 hin durch. Durch die Verbindung des Ventiltellers 29 über den Fortsatz 28 mit der Membran 26 hebt sich der Dichtkranz 31 von der Innenseite 35 des Oberteils 13 ab, so daß eine Verbindung vom Innenraum 34 zum Auslaßkanal 38 entsteht. Die isolierende Schicht 18 verhindert bei zu großer Durchbiegung der Membran 26 ein Berühren der beiden elektrisch leitenden Schichten 17, 22 (Elektroden des elektrostatischen Antriebes) und damit einen Kurzschluß.

Durch die rotations- bzw. axialsymmetrische Ausbildung der Vertiefung 25, der Membran 26, des Fortsatzes 28 und des Ventiltellers 29 ist ein gleichmäßiges Abheben von der Innenseite 35 bzw. ein gleichmäßiges Anliegen gewährleistet. Der Druck im Innenraum 34 bei geschlossenem Auslaßkanal 38 wirkt einerseits nach unten auf die Membran 26 und gleichzeitig auf die freie Ringfläche des Ventiltellers 29. Die beiden Ringflächen, d.h. die Ringfläche der Membran 26 und die einseitig mit Druck beaufschlagte Ringfläche (resultierende Ringfläche des Ventiltellers 29) sind in ihren Abmessungen so aufeinander abgestimmt, daß das bewegliche Bauelement (Ventilteller 29, Fortsatz 28, Membran 26) statisch druckausgeglichen ist. Die nach oben gerichteten Kräfte und Momente durch den Druck auf die resultierende Ringfläche am Ventilteller 29 und die nach unten gerichteten auf die entsprechende Ringfläche der Membran 26 sind gleich groß. Die wirksame Ringfläche am Ventilteller 29 wirkt dabei als Druckausgleichsfläche zur Membran 26. Dabei wird vorausgesetzt, daß die Drücke unterhalb und oberhalb des beweglichen Bauelementes im wesentlichen gleich groß sind, d.h. der Druck in der Vertiefung 25 sollte im wesentlichen dem Druck im Auslaßkanal 38 bei geschlossenem Ventilglied entsprechen. In der Vertiefung 25 muß sich jedoch nicht zwangsläufig das gleiche Medium wie im Auslaßkanal 38 befinden. Aufgrund der druckausgeglichenen Bauweise des Mikroventils 10 kann die Rückstellkraft durch die Membran 26 sehr klein sein. Durch die druckausgeglichene Bauweise ist es weiterhin möglich, daß sehr hohe Drücke gesteuert werden, und daß als elektrisches Betätigungmittel ein relativ schwacher Antrieb verwendbar ist. Das Mikroventil 10 eignet sich zum Steuern großer hydraulischer oder pneumatischer Leistungen und ermöglicht eine hohe Dynamik. Durch entsprechende Abwandlung der wirksamen Ringfläche am Ventilteller 29 (Druckausgleichsfläche) relativ zur auslaßdruckbeaufschlagten Fläche des Ventiltellers 29 im Bereich des Auslaßkanals 38 kann auch ein nur teilweiser Druckausgleich erzielt werden. Gleichzeitig ist damit aber eine Berücksichtigung der dynamischen Strömungskräfte möglich, so daß das Schaltverhalten des Mikroventils 10 beeinflußt werden kann.

Bei dem hier beschriebenen Mikroventil 10 ist das Mittelteil 12 durch Spritzgießen aus einem Kunststoff hergestellt, dessen Zusammensetzung und Beschaffenheit an den Einsatzort und das Druckmittel angepaßt sind. Es ist auch möglich, das Mittelteil 12 und/oder Oberteil 13 und Unterteil 11 durch Prägen darzustellen. Insbesondere die kegelstumpfförmige Ausbildung des Ventiltellers 29 erleichtert nach dem Spritzgießen das Ausformen des Mittelteils 12. Nach dem Ausformen und eventuellen Entgraten wird die Unterseite (einschließlich Vertiefung 25 und Membran 26) mit einer elektrisch leitenden Schicht 22 versehen und kontaktiert. Durch die beschriebene Ausbildung sind die wesentlichen Bauelemente mit eng tolerierten Maßen im Mittelteil 12 integiert. Die Höhe des Innenraums 34 - als weiteres funktionswesentliches Maß - ist in erster Linie für ein gutes Anliegen des Dichtkranzes 31 und die Vorspannung der Membran 26 verantwortlich.

Das Unterteil 11, das durch Spritzgießen, Prägen oder Stanzen ebenfalls aus einem Kunststoff oder aus Aluminium gefertigt sein kann, wird in zwei Arbeitsschritten auf seiner Oberseite 16 zuerst mit einer elektrisch leitenden Beschichtung versehen und kontaktiert und anschließend mit der isolierenden Schicht. Bei der Verwendung von Aluminium ist erst eine weitere isolierende Schicht aufzubringen. Der Kunststoff für das Unterteil 11 kann ein anderer als der des Mittelteiles 12 sein , da die elastischen Eigenschaften nicht im Vordergrund stehen. Dafür können andere Eigenschaften, wie Hitzebeständigkeit, Festigkeit, oder ähnliches, im Vordergrund stehen. Unterteil 11 und Mittelteil 12 werden in einem weiteren Arbeitsgang lagerichtig zusammengeführt und miteinander verklebt oder verschweißt. Neben einem geeigneten Kunststoff ist auch - wie bereits angeführt - die Verwendung eines bezüglich seiner thermischen Ausdehnung angepaßten metallischen Werkstoffes (z.B. Aluminium) möglich. Es ist auch möglich, die Kanäle 14, 15 bzw. 23, 24 erst nach diesem Zusammenfügen durch Bohren, Laserschneiden oder ähnliche Verfahren zu erstellen, so daß die lagerichtige Zuordnung stets gewährleistet ist.

Das Oberteil 13 kann aus einem Kunststoff aufgebaut werden, der sich von dem des Unterteils 11 oder des Mittelteils 12 bzw. von beiden unterscheidet. Hergestellt wird das Oberteil 13 durch einen entsprechenden Formprozeß aus festem Kunststoff zum Beispiel durch Prägen, oder aus einem fließfähigen durch Spritzgießen. Das Oberteil 13 kann auch aus einem geeigneten Metall oder einer (Metall-) Legierung bestehen. Nach dem Formvorgang wird die Düsenplatte 39 in den Auslaßkanal 38 eingesetzt und verklebt oder verschweißt. Die Düsenplatte kann bei spritzgegossenen oder spritzgeprägten Oberteilen auch mit diesen in einem Stück gefertigt sein. Das Oberteil 13 wird auf das Mittelteil 12 aufgesetzt und ebenfalls verklebt oder verschweißt. Es ist auch möglich, Unterteil 11 , Mittelteil 12 und Oberteil 13 in einem gemeinsamen Arbeitsgang zu fügen und zu verbinden. Das Oberteil 13 und/oder das Unterteil 11 können im Formprozeß auch schon an den Einsatzort des Mikroventils angepaßt werden, zum Beispiel durch Anformen von Schlauchanschlüssen, Befestigungsmitteln oder Verdrehsicherungen. Im Gegensatz zur beschriebenen elektrostatischen Ventilbetätigung kann die Beschichtung an Unter- und Mittelteil auch durch eine piezoelektrische am Mittelteil ersetzt werden, so daß die Betätigung des Ventils auf an sich bekannte Weise durch die Formänderung aufgrund des piezoelektrischen Effektes erfolgt.

In den Figuren 2 und 3 ist ein zweites Ausführungsbeispiel eines erfindungsgemäßen Mikroventils beschrieben, wobei für gleiche Bauelemente gleiche Bezugszeichen verwendet sind.

Das Mikroventil 10a unterscheidet sich vom zuvor beschriebenen hauptsächlich durch die Ausbildung der Vertiefung und damit der Membran, wodurch sich höhere Antriebs- bzw. Betätigungskräfte ergeben. Die Vertiefung 25a in der Grundplatte 20a des Mittelteils 12a hat die Form eines flachen Kegelstumpfes, der sich zur Unterseite hin aufweitet. Von diesem Kegelstumpf geht eine mittige Sackbohrung 41 aus, die durch den Fortsatz 28 bis in den Ventilteller 29 ragt. Die Unterseite 21 der Grundplatte 20 und die Vertiefung 25a sind - wie im Ausführungsbeispiel zuvor - mit einer elektrisch leitenden Schicht 22 versehen. Entsprechend ist das Unterteil 11 mit einer elektrisch leitenden Schicht 17 und einer isolierenden Schicht 18 versehen.

Die Grundplatte 20a ist nicht wie im Ausführungsbeispiel zuvor als flache Scheibe ausgebildet, sondern weist im Bereich der Membran 26a einen Anstieg 42 auf, der dem kegeligen Verlauf der Vertiefung 25a entspricht, so daß eine gleichmäßige Membrandicke gewährleistet ist.

Bei der elektrostatischen Betätigung des Mikroventils 10a legt sich die Membran 26a vom Außenumfang der Vertiefung 25a ausgehend zur Mitte hin am Unterteil 11a an, da die Anziehungskräfte quadratisch mit dem Kehrwert des Abstandes der elektrisch leitenden Schichten ansteigen. Das verdrängte (Gas-)Volumen kann dabei bei geringem Druckanstieg in die Sackbohrung 41 ausweichen.

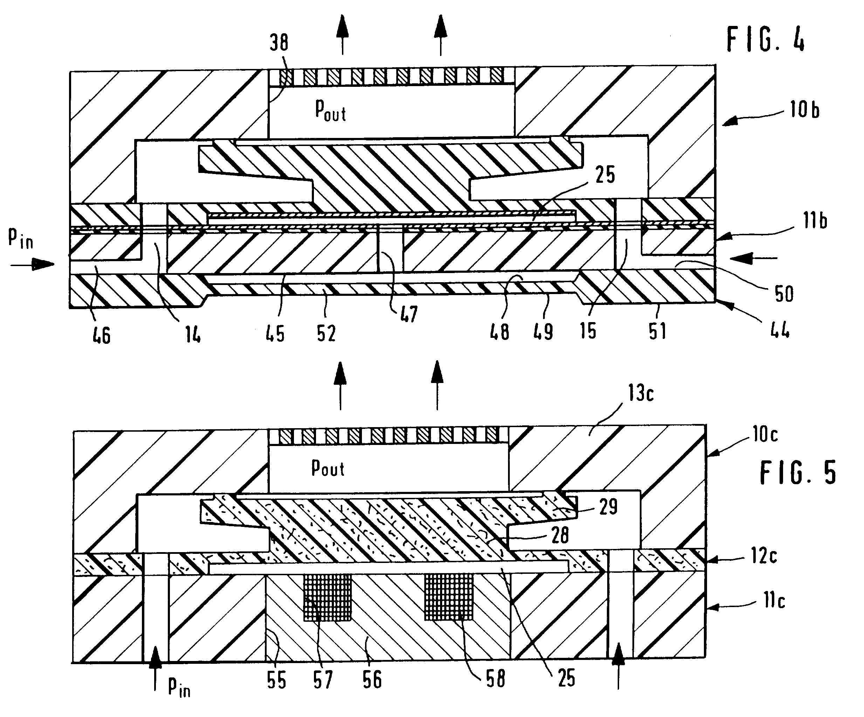

In Figur 4 ist ein drittes Ausführungsbeispiel des Mikroventils dargestellt, bei dem ein vollständiger statischer Druckausgleich der bewegten Bauelemente bei beliebigem Auslaßdruck möglich ist. Das Mikroventil 10b entspricht in seinem Aufbau im wesentlichen dem in Figur 1 beschriebenen Mikroventil 10, wobei an das Unterteil 11b noch ein Basisteil 44 angesetzt ist. Das Unterteil 11b hat an seiner Unterseite 45 radiale Kanäle oder - wie hier dargestellt - eine umlaufende Ringnut 46, die von den Kanälen 14, 15 bis an den Außenrand reicht. Durch diese Ringnut 46 können die Kanäle 14, 15 vom Außenumfang des Mikroventils 10b aus mit Druckmittel beaufschlagt werden. Im Unterteil llb ist weiterhin eine mittige Bohrung 47 angeordnet, die von der Unterseite 45 ausgeht und bis in die Vertiefung 25 ragt. Das Basisteil 44 ist als flache zylindrische (axialsymmetrische) Scheibe durch einen Formprozeß aus Kunststoff gefertigt und hat zwei zylindrische (axialsymmetrische) Vertiefungen 48, 49 in seiner Oberseite 50 bzw. Unterseite 51. Die Vertiefungen 48, 49 bilden im Basisteil 44 eine zweite Membran 52 aus.

Das Basisteil 44 wird entweder in einem separaten Arbeitsgang oder mit anderen Bauteilen (Oberteil, Mittelteil, Unterteil) zusammen angefügt und mit dem Unterteil 11b fest und unlösbar verbunden, zum Beispiel verklebt oder verschweißt.

Beim Betrieb des Mikroventils 10b wird die Unterseite 51 des Basisteils 44 mit dem Auslaßdruck (pₒᵤₜ) beaufschlagt, der auch im Auslaßkanal 38 ansteht. Somit wird das bewegliche Element (Ventilteller 29, Fortsatz 28, Membran 26) unabhängig von der Höhe dieses Auslaßdruckes stets vollständig (statisch) druckausgeglichen.

In Figur 5 ist ein viertes Ausführungsbeispiel des Mikroventils beschrieben, bei dem das Betätigungsmittel bzw. der Antrieb elektromagnetisch ausgebildet ist. Dieses Betätigungsmittel besteht aus einem in das Unterteil integrierten, durch eine Spule erregten Topfmagneten mit weichmagnetischem Kern. Oberteil 13c und Mittelteil 12c des Mikroventils 10c sind im wesentlichen so aufgebaut, wie die entsprechenden Bauteile in dem in Figur 1 beschriebenen Mikroventil 10. Im Gegensatz dazu fehlt jedoch beim Mittelteil 12c die elektrisch leitende Schicht. Dafür sind in den Kunststoff ferromagnetische Partikel eingebettet, die bei der Fertigstellung der Kunststoffrohmasse in diese eingebracht werden.

Beim Unterteil 11c fehlen ebenfalls die elektrisch leitende Schicht und die isolierende Schicht. Dafür weist das Unterteil eine durchgehende Bohrung 55 auf, in die ein Kern 56 aus an sich bekannten, gestapelten Elektroblechen fest eingesetzt ist. Dieser Kern 56 hat an seiner dem Mittelteil 12c zugewandten Stirnseite eine Ringnut 57, in die eine an sich bekannte Spule 58 gewickelt ist.

Durch entsprechende Bestromung der Spule 58 werden der Fortsatz 28 und der Ventilteller 29 des Mittelteils 12c zur Spule 58 hin angezogen und wirken als Magnetanker. Die Vertiefung 25 bzw. der Zwischenraum zwischen Spule 58 und dem Grund der Vertiefung 25 wirkt als Arbeitsluftspalt. Der Fluß des magnetischen Kreises wird dabei im wesentlichen durch den Fortsatz 28 geführt.

Es ist auch möglich, die Einbettung ferromagnetischer Partikel in das Mittelteil 12c lokal zu begrenzen, wobei diese dann nur in den Bereich des magnetischen Flusses eingebettet werden.

Um das Wickeln der Spule 58 zu erleichtern, kann der Kern 56 auch aus zwei konzentrischen, ineinandergesteckten Teilen bestehen, einer äußeren Hülse und einem inneren Wickelzylinder. Statt der Ausbildung des Kerns 56 aus gestapelten Elektroblechen kann dieser auch aus einem Kunststoff geformt werden, der mit ferrmomagnetischen Partikeln durchmischt ist.

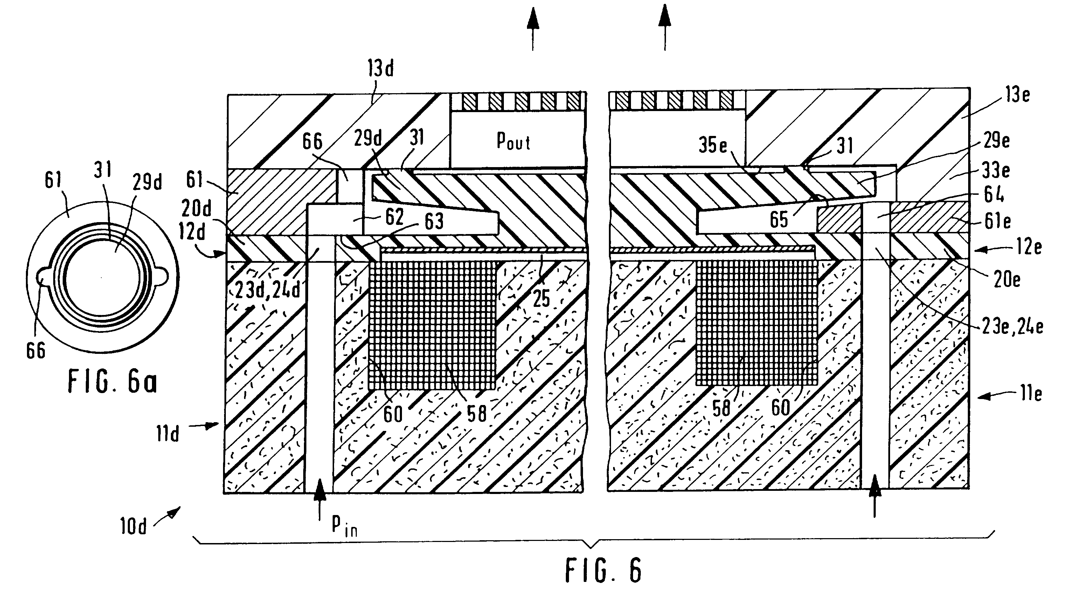

Die Figur 6 zeigt in der linken bzw. der rechten Bildhälfte jeweils eine Abwandlung des zuvor beschriebenen Mikroventils, die sich durch eine geänderte Magnetflußführung von diesem unterscheiden. Die beiden Ausführungsformen selbst unterscheiden sich in der Ausbildung des Leitringes und der entsprechenden Formgebung des Oberteils, wobei der Luftspalt zwischen Leitring und Ventilteller entweder im Kraftfluß liegend (Bewegungsrichtung des Ventiltellers) oder orthogonal dazu angeordnet ist. In beiden Fällen hat das Unterteil 11d bzw. 11e in seiner Oberseite eine Ringnut 60, deren Außendurchmesser etwa dem der Vertiefung 25 entspricht. In diese Ringnut 60 ist die Spule 58 gewickelt. Das Unterteil 11d bzw. 11e ist mit ferromagnetischen Partikeln durchsetzt und entweder - wie dargestellt - einteilig ausgebildet oder - wie beim Kern 56 beschrieben - aus zwei konzentrischen Teilen zusammengesetzt. Auf dieses Unterteil 11d bzw. 11e ist das Mittelteil 12d bzw. 12e aufgesetzt, das in seiner Ausbildung im wesentlichen dem zuvor beschriebenen Mittelteil 12c entspricht.

Im Fall der ersten - in der linken Bildhälfte dargestellten - Abwandlung des Mikroventils ist auf die Grundplatte 20d des Mittelteils 12d ein ferromagnetischer Leitring 61 aufgesetzt, dessen Außenabmessungen denen der Grundplatte 20d entsprechen und dessen Innenabmessungen etwas größer sind als die Abmessungen des Ventiltellers 29d bzw. der Vertiefung 25. Die Figur 6a zeigt diesen Leitring in einer Draufsicht auf ein geöffnetes Mikroventil 10d. Im Bereich der Kanäle 23d bzw. 24d hat dieser Leitring eine vom inneren Umfang ausgehende Nut 62 an seiner Unterseite 63. Desweiteren weist er an seiner Oberseite mindestens zwei Bohrungen oder Aussparungen 66 auf, die so angeordnet sind, daß sie den Volumenstrom des Fluids bei geöffnetem Ventil am Dichtkranz 31 vorbeiführen. Der Spalt zwischen Leitring 61 und Ventilteller 29 kann dann zur effektiven Führung des magnetischen Flusses klein gehalten werden. Die Dicke des Leitringes 61 entspricht der Höhe des Randes 33 des Oberteils 13 in den zuvor beschriebenen Ausführungsbeispielen, d.h. die Dicke des Leitringes 61 ist so gewählt, daß der Dichtkranz 31 des Ventiltellers 29d mit einer definierten Andruckkraft an das Oberteil 13d gedrückt wird. Das Oberteil 13d ist demzufolge bei dieser Abwandlung als flache Scheibe (ohne hülsenförmigen Rand) ausgebildet.

Das Mittelteil 12d samt Grundplatte 20d, Fortsatz 28 und Ventilteller 29d ist, wie der Leitring 61, vorzugsweise aus einem Kunststoff geformt, der mit ferromagnetischen Partikeln durchsetzt ist.

Das Zusammenfügen und Verbinden der einzelnen Schichtbauteile (Unterteil, Mittelteil, Leitring, Oberteil) kann analog zu den zuvor beschriebenen Ausführungsformen in einzelnen Arbeitsschritten oder in jeglicher Zusammenfassung erfolgen.

Der magnetische Kreis durchläuft beim Mikroventil 10d die Vertiefung 25 als Arbeitsluftspalt, den Fortsatz 28, den Ventilteller 29d, den Ringraum zwischen Ventilteller 29d und Leitring 61 (Nebenluftspalt) und die Grundplatte 20d, und wird über das Unterteil lld geschlossen. Der Nebenluftspalt liegt in diesem Fall orthogonal zur Bewegungsrichtung des Ventiltellers 29d.

In der zweiten Abwandlung (rechte Bildhälfte) liegt der Nebenluftspalt in Kraftrichtung, so daß die anziehenden Kräfte in gewissem Maße verstärkt werden.

Der Leitring 61e ist - wie in der Ausführungsform zuvor - auf die Grundplatte 20e aufgesetzt, seine Innenabmessungen entsprechen etwa den Abmessungen der Vertiefung 25. Seine Dicke ist jedoch geringer als bei der Ausführungsform vorher, und ist kleiner als der Abstand zwischen Grundplatte 20e und Ventilteller 29e an dessen Außenrand. Im Bereich der Kanäle 23e, 24e, weist der Leitring 61e mit diesen fluchtende Durchgänge 64 auf. Zur Verbesserung des magnetischen Flusses ist der Ventilteller 29e mit größerer Außenabmessung ausgebildet, so daß er den Leitring 61e teilweise überdeckt. Die Abmessungen des Dichtkranzes 31 und die der Vertiefung 25 sind aber weiterhin unverändert bzw. im Hinblick auf den Druckausgleich aufeinander abgestimmt.

Im Bereich der Überdeckung von Ventilteller 29e und Leitring 61e weist letzterer eine kegelförmige Einsenkung 65 auf, deren Abschrägung an den kegeligen Verlauf des Ventiltellers 29e angepaßt ist.

Das Oberteil 13e hat einen hülsenförmigen Rand 33e, der auf dem Leitring 61e aufliegt und dessen Höhe so gewählt ist, daß der Ventilteller 29e bzw. der Dichtkranz 31 an der Innenseite 35e des Oberteils 13e anliegt.

Auch in dieser Ausführungsform sind Mittelteil 12e, Leitring 61e und Unterteil 11e ferromagnetisch. Der magnetische Kreis verläuft analog zum zuvor beschriebenen Ausführungsbeispiel, mit dem Unterschied, daß hier der Ringspalt zwischen Leitring 61e und Ventilteller 29e (Nebenluftspalt) in Bewegungsrichtung des Ventiltellers 29e durchflossen ist.

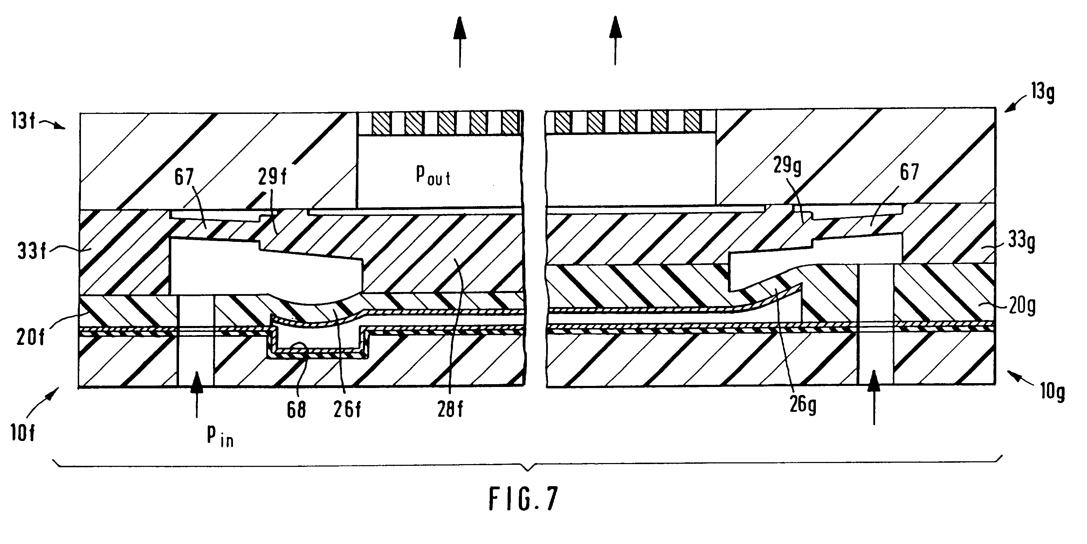

Um den negativen Folgen eines möglicherweise auftretenden Kriechens der Membran 26 vorzubeugen, kann diese alternativ als reine Dichtmembran ohne Federwirkung ausgebildet werden. Alternativ oder zusätzlich können die Ausbildung der Vertiefung bzw. der Membran und die des Unterteils im Bereich der Vertiefung variiert werden. In Figur 7 sind dazu zwei mögliche Ausführungsformen dargestellt. Beide Auführungsformen sind hier anhand des elektrostatischen Betätigungsprinzips erläutert, eine Übertragung auf das piezoelektrische oder elektromagnetische ist jedoch ohne weiteres möglich.

Um die Wirkung der Membran 26f bzw. 26g auf eine reine Dichtfunktion zu beschränken, sind sowohl bei dem - in der linken Bildhälfte dargestellten - Mikroventil 10f als auch bei dem - in der rechten Bildhälfte dargestellten - Mikroventil 10g zusätzliche Federelemente 67 vorgesehen. Diese sind als radial verlaufende Federbalken ausgebildet, die jeweils fest mit dem hülsenförmigem Rand 33f, 33g einerseits und dem Außenrand des Ventiltellers 29f, 29g andererseits verbunden sind.

Die Federelemente 67 werden beim Formprozeß des hülsenförmigen Randes 33f, 33g und des Ventiltellers 29f, 29g mit angeformt und mit diesen Teilen gleichzeitig in einem Spritzgußteil gefertigt. Das Mittelteil 12f, 12g erhält dazu verteilhafterweise den im nachfolgenden beschriebenen Aufbau. Grundplatte 20f, 20g und Fortsatz 28f, 28g werden als ein Bauteil gefertigt, auf das dann der Ventilteller 29f, 29g mit den Federelementen 67 und dem hülsenförmigen Rand 33f, 33g aufgesetzt und verklebt oder verschweißt werden. Das Oberteil 13f, 13g ist dann nur eine Scheibe.

Der Rand 33f, 33g bildet in diesem Fall zusammen mit der Grundplatte 20f, 20g die mittlere Schicht des Mikroventils 10f, 10g.

Ein Einfluß des Kriechens der Membran in radialer Richtung auf eine Bewegung in axialer Richtung (Öffnungs- bzw. Schließrichtung) kann auch durch eine entsprechende Ausbildung der Membran verringert werden, wie sie in Figur 7 dargestellt ist. Durch entsprechende Formgebung und/oder Dehnung erhält die Membran 26f einen gewölbten Querschnitt oder einen etwa S-förmigen (26g). Durch diese oder andere Wölbungen bzw. Krümmungen der Membran 26f, 26g werden die Auswirkungen einer Formänderung der Membran in Querrichtung (senkrecht zur Bewegungsrichtung des Ventiltellers) auf die Anpresskraft bzw. Vorspannung wesentlich vermindert.

Bei dem Mikroventil 10f ist darüberhinaus im Bereich der Membran 26f eine umlaufende Ringnut 68 im Unterteil 10f ausgebildet, so daß ein Berühren bzw. Anlegen der Membran auch bei hohen Druckunterschieden auf deren beiden Seiten vermieden wird.

Jede der hier in Figur 7 dargestellten Maßnahmen zur Reduktion der Auswirkung eines eventuellen Membran-Kriechens kann für sich, mit einer oder beiden der anderen Maßnahmen bzw. Ausbildungen auf die Mikroventile nach Figur 1, 4 bis 6 angewendet werden. Beim Mikroventil 10a nach Figur 2 wird vorteilhafterweise die Membran 26a beispielsweise durch gezieltes Einlagern von Faserwerkstoffen, Metallen oder durch Nutzen von entsprechend kriechfesten Kunststoffen angepaßt. Bei diesem Ventil können vor allem durch den Einsatz des elektrostatischen Antriebsprinzipes hohe Betätigungskräfte oder große Ventilhübe bewirkt werden, so daß der steuerbare Volumenstrom und/oder der Betriebsdruck erhöht werden können.

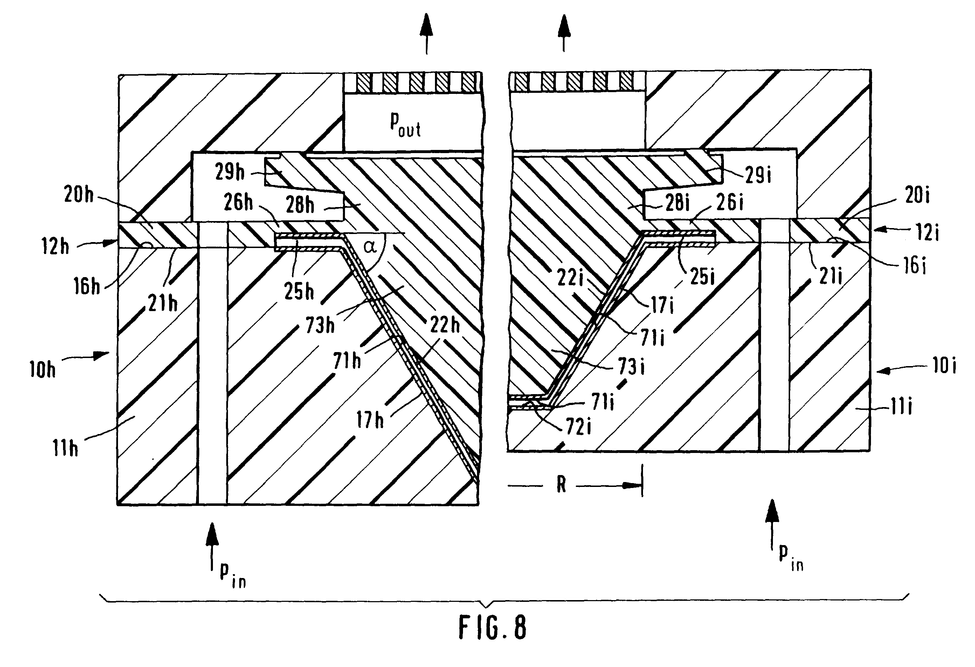

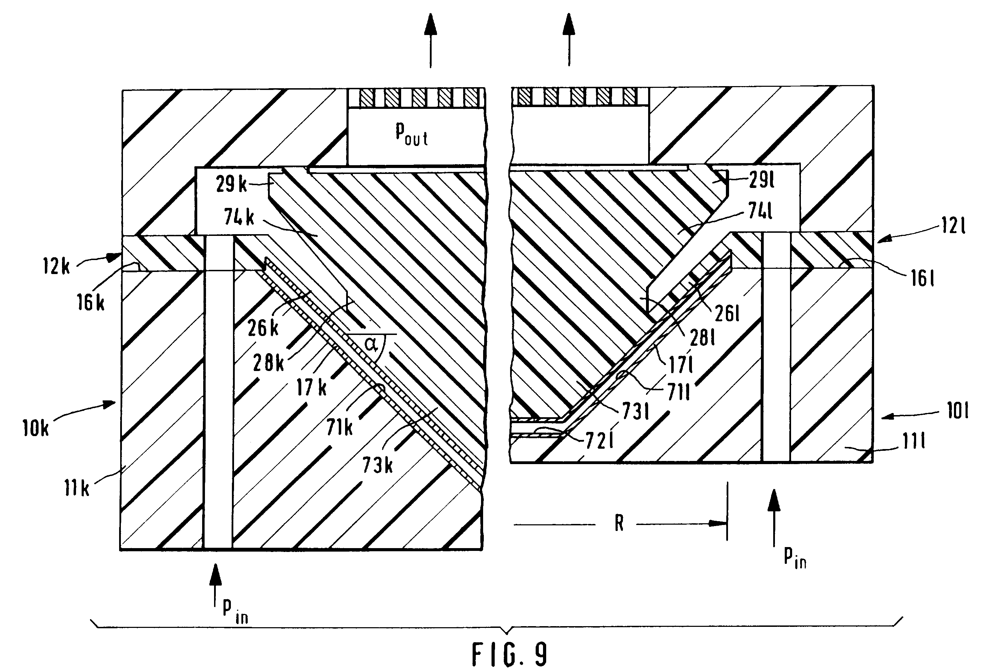

Die in den Figuren 8 und 9 beschriebenen Abwandlungen (10h, 10i, 10k, 10l) des Mikroventils 10 unterscheiden sich von dem in Figur 1 beschriebenen durch Änderungen in den Unterteilen (11h - 11l) und den Mitteiteilen (12h - 12l).

Die in den jeweiligen linken Bildhälften von Figur 8 bzw. Figur 9 dargestellten Unterteile 11h bzw. 11k haben eine von deren Oberseite 16h bzw. 16k ausgehende kegelförmige Vertiefung 71h, 71k. Die in den jeweiligen rechten Bildhälften von Figur 8 bzw. Figur 9 dargestellten Unterteile lli bzw. 11l haben eine von deren Oberseite 16i bzw. 161 ausgehende kegelstumpfförmige Vertiefung 71i bzw. 71l. Jede dieser Vertiefungen 71h bis 71l kann jedoch auch als (axialsymmetrische) pyramidenförmige bzw. pyramidenstumpfförmige Vertiefung ausgebildet sein.

Die Mantelflächen der Vertiefungen 71h, 71k und die Mantelflächen der Vertiefungen 71i, 71l samt den Stirnflächen 72i, 72l sind mit einer elektrisch leitenden Schicht 17h bzw. 17l versehen.

Die in der Figur 8 dargestellten Mittelteile 12h und 12i haben jeweils einen Fortsatz 28h bzw. 28i und einen Ventilteller 29h und 29i, die denen des Mikroventils 10 in Figur 1 entsprechen, und die auf einer Grundplatte 20h bzw. 20i angeordnet sind. Diese hat an ihrer Unterseite 21h bzw. 21i eine Vertiefung 25h bzw. 25i, die ringförmig ausgebildet ist und deren Außendurchmesser größer als der gegenüberliegende Außendurchmesser der Vertiefung 71h bzw. 71i ist.

Der Innendurchmesser entspricht etwa dem des Fortsatzes 28h bzw. 28i. Durch die Vertiefung wird - analog zum Ausführungsbeispiel nach Figur 1 - die Membran 26h, 26i ausgebildet. Von der Unterseite 21h bzw. 21i ausgehend ist an der Unterseite der Membran bzw. der Grundplatte ein kegelförmiger Fortsatz 73h bzw. ein kegelstumpfförmiger Fortsatz 73i ausgebildet, der in die Vertiefung 71h bzw. 71i ragt, ohne daß sich die jeweiligen Mantelflächen berühren. Die Kegelwinkel von Vertiefung 71h bzw. 71i und Fortsatz 73h bzw. 73i entsprechen einander. Sind die Vertiefungen 71h - 71i pyramiden- oder pyramidenstumpfförmig ausgebildet, sind die Fortsätze 73h - 73i entsprechend angepaßt.

Die Vertiefungen 25h und 25i, die Mantelflächen der Fortsätze 73h und 73i und die Unterseite 74i der Fortsätze 73i sind mit einer elektrisch leitenden Schicht 22h bzw. 22i versehen.

Analog zum Ausführungsbeispiel nach Figur 1 kann auf die elektrische Schicht 17h bzw. 17i des Unterteils bzw. auf die elektrisch leitende Schicht 22h bzw. 22i des Mittelteils eine hier nicht näher dargestellte isolierende Schicht aufgebracht sein. Die beiden elektrisch leitenden Schichten 17h bzw. 17i und 22h bzw. 22e wirken - wie bereits zuvor beschrieben - als Elektroden eines elektrostatischen Antriebes. Durch die Formgebung der beiden Elektroden wird deren Oberfläche vergrößert. Bei gleichem Radius und gleichem Hub der Elektroden gegenüber denen des Ausführungsbeispiels nach Figur 1 ist die elektrostatische Antriebskraft erheblich größer als die eines elektrostatischen Antriebes mit ebenen Elektroden. Soll dagegen eine gleich große Antriebskraft erzeugt werden, kann ein entsprechend größerer Arbeitshub realisiert werden. Der Kegelwinkel bzw. Pyramidenwinkel kann beliebige Werte zwischen 0° (unendlich flacher Kegel) bis 90° (unendlich spitzer Kegel) annehmen. Die Größe des Kegelwinkels und die Höhe des Kegelstumpfes sind abhängig von den Anforderungen an das Mikroventil, den Möglichkeiten des Fertigungsprozesses und werden durch die Empfindlichkeit des Schließelementes (Ventilteller mit Fortsatz) gegen Verkippen beschränkt.

Die in Figur 9 beschriebenen Abwandlungen des Ausführungsbeispiels unterscheiden sich von dem zuvor in Figur 8 beschriebenen durch eine geänderte Lage der Membran 25k bzw. 25l. Der Durchmesser der kegel- bzw. kegelstumpfförmigen Vertiefung 71k bzw. 71l entspricht an der Oberseite 16k bzw. 16l des Unterteils dem Außendurchmesser der Membran. Die Membran 25h bzw. 25l verläuft zusammen mit der Mantelfläche des Fortsatzes 73k bzw. 73l parallel zur Mantelfläche der Vertiefung 71k bzw. 71l. Der Fortsatz 28k bzw. 28i zwischen Grundplatte 20k bzw. 20i und Ventilteller 29k bzw. 29l ist an die entsprechend geänderten Abmessungen angepaßt, d.h. zwischen Fortsatz und Ventilteller ist ein konisches Übergangsstück 74k bzw. 74l eingepaßt.

Im Gegensatz zu den vier beschriebenen Ausführungsformen bzw. Abwandlungen des Mikroventils können die Elektroden jede andere Geometrie annehmen, die geeignet ist, die wirksame Fläche des Antriebes zu vergrößern (Mantelfläche ≥ Grundfläche) und/oder den Abstand der Elektroden bei gleichem Hub zu verringern.

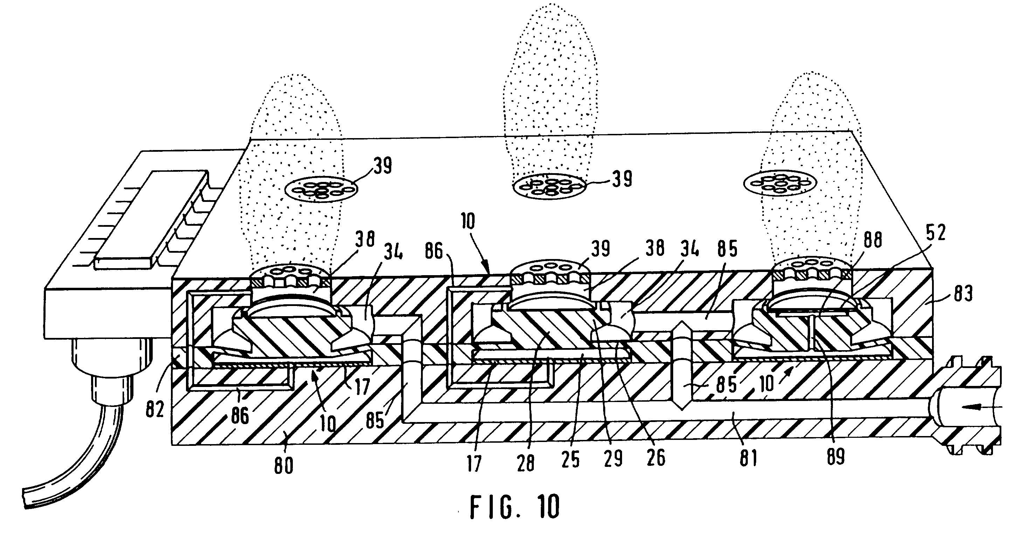

In Figur 10 ist eine Ventilanordnung mit neun einzelnen, parallel geschalteten Mikroventilen 10 dargestellt, von denen drei Mikroventile im Schnitt dargestellt sind. Die Ventilanordnung ist modular aufgebaut, und hat ein plattenförmiges Unterteil 80, mit einer Sammelanschlußleitung 81, über die die Druckmittelzufuhr erfolgt. Das plattenförmige Unterteil 80 entspricht in seiner Funktion und seinem Aufbau im wesentlichen dem Unterteil 10 des Mikroventils nach Figur 1, wobei hier neun einzelne Unterteile zu einem gemeinsamen Unterteil zusammengefügt sind und die einzelnen Druckmittelkanäle zu einem Sammelkanal verbunden sind. Auf das plattenförmige Unterteil 80 ist ein ebenfalls plattenförmiges Mittelteil 82 aufgesetzt, auf das wiederum ein plattenförmiges Oberteil 83 aufgesetzt ist. Das Oberteil 83 entspricht in seiner Funktion und seinem Aufbau dem Oberteil 13 nach Figur 1, wobei jeweils neun Oberteile zu einem Bauteil zusammengefügt sind. Das Oberteil 83 hat entsprechend 9 Düsenplatten 39, die in drei Reihen zu jeweils drei Düsenplatten bzw. Mikroventilen angeordnet sind. Jede dieser Düsenplatten 39 schließt einen Auslaßkanal 38 ab, der vom Innenraum 34 ausgeht. Der Auslaßkanal 38 wird, wie bereits in Figur 1 beschrieben, durch den Ventilteller 29 des Mikroventils verschlossen. Jeder der neun Ventilteller 29 mit entsprechendem Fortsatz 28, Membran 26 und Vertiefung 25 ist entsprechend im Mittelteil 82 ausgebildet. Jede Membran bzw. jede Vertiefung 25 ist an ihrer Unterseite mit einer elektrisch leitenden Schicht (hier nicht dargestellt) versehen, ohne daß sich die einzelnen elektrisch leitenden Schichten berühren. Gegenüberliegend sind auf das Unterteil 80 neun einzelne elektrisch leitende Schichten angeordnet, die einzeln und unabhängig voneinander angesteuert werden können. Die elektrisch leitenden Schichten 17 und die gegenüberliegenden elektrisch leitenden Schichten in den Vertiefungen 25 bilden jeweils den elektrostatischen Antrieb eines Mikroventils.

Die Druckbeaufschlagung jedes einzelnen Mikroventils erfolgt über Verbindungskanäle 85, die von der Drucksammelleitung 81 ausgehen und durch das Mittelteil 82 und das Oberteil 83 in den Innenraum 34 dringen.

Zum Druckausgleich ist jedem der Mikroventile 10 ein einzelner Ausgleichkanal 86 zugeordnet, der den Ausgangskanal 38 mit der Vertiefung 25 verbindet. Die einzelnen Mikroventile können auch so ausgebildet sein, daß der Ausgleichskanal die Unterseite einer in Figur 4 dargestellten Membran 52 mit dem Druck des Ausgangskanals 38 beauf- schlagt. Alternativ kann darüberhinaus der Ausgleichskanal 86b durch Ventilteller 29 und Fortsatz 28 verlaufen und die Kavität 88 unter der schlaffen Membran 52b mit der Vertiefung 25 verbinden. Druck- schwankungen im Auslaßkanal 38 werden von der Membran 52b auf die Kavität 88 übertragen und vom Ausgleichskanal 86b an die Unterseite der Antriebsmembran 26 weitergeleitet. Alle Varianten des Aus- gleichskanals bewirken zusammen mit der Membran 52b oder auch ohne sie einen vollständigen statischen Druckausgleich. Der Druck im Aus- laßkanal ist bei Verwendung der Düsenplatte 39 Schwankungen unterworfen, deren Auswirkungen so ausgeglichen werden können.

Jedes der Mikroventile 10 ist - wie bereits beschrieben - einzeln ansteuerbar und steht jeweils unabhängig von den anderen Mikroventilen mit der Drucksammelleitung 81 in Verbindung. Damit kann der Volumenstrom durch die Ventilanordnung von Null bis zu einem Volumenstrom, der der Summe der neun Einzelvolumenströme der Mikroventile entspricht, in Stufen geschaltet werden.

Im Gegensatz zu dem hier beschriebenen Ausführungsbeispiel können im Mittelteil 82 auch unterschiedliche Ventilelemente angeordnet sein, d.h. unterschiedliche Ausführungen des Mikroventils können in der Ventilanordnung zusammengefaßt werden. Dazu können dann beispielsweise unterschiedliche Mittelteile 12, 12a bis 12l zu einem gemeinsamen Mittelteil 82 zusammengefaßt werden oder in eine entsprechende Trägerplatte eingesetzt sein. Das plattenförmige Unterteil 80 und das Oberteil 83 sind entsprechend anzupassen. Es wäre weiterhin auch möglich, mehrere Mikroventile 10, 10a bis h zu einer Ventilanordnung zusammenzuschalten, indem die einzelnen Unterteile 11, 11a bis 11l und/oder die Oberteile 13, 13a bis 13l durch ein entsprechendes gemeinsames Unterteil 80 bzw. Oberteil 83 ersetzt werden.

## Patentansprüche

1. Mikroventil aus übereinander angeordneten, miteinander verbundenen Schichten (11, 11a bis 11l; 12, 12a bis 12l; 13, 13a bis 13l; 44, 61, 61e), mit wenigstens zwei Durckmittelanschlüssen (14, 15; 38) für Zulauf und Auslaß und einem dazwischengeschalteten Ventilsitz (38, 35), dem ein Schließglied (31) zugeordnet ist, das durch elektrische Betätigungsmittel (17, 18, 22; 58) auslenkbar ist, wobei das Schließglied mit einer Membran (26, 26a bis 26l) fest verbunden ist, die in einer der Schichten (12, 12a bis 12l) integriert ist und an einen mit Druckmittel beaufschlagten Raum (34) grenzt, und mit einer der druckbeaufschlagten Membran entgegenwirkenden Druckausgleichfläche (25), dadurch gekennzeichnet, daß das Schließglied (31), die Membran (26, 26g) und die Druckausgleichsfläche (29f, 29g) durch einen Kunststofformprozeß, insbesondere Spritzgießen oder Prägen, in einem zweischichtigen Kunststoffbauteil (20f, 20g, 33f, 33g) ausgebildet sind, das zusammengesetzt eine mittlere Schicht des Mikroventils ist und mit seinem äußeren, zweischichtigen Umfang eingespannt ist.

2. Mikroventil nach Anspruch 1, dadurch gekennzeichnet, daß die Membran (26, 26a bis 26l) durch eine Ausnehmung (25, 25a bis 25l) an der dem Schließglied (31) abgewandten Unterseite (21) der mittleren Schicht (12, 12a bis 12l) ausgebildet ist.

3. Mikroventil nach Anspruch 2, dadurch gekennzeichnet, daß die Ausnehmung (25, 25a bis 25l) in Form eines flachen Zylinders ausgebildet ist.

4. Mikroventil nach Anspruch 2, dadurch gekennzeichnet, daß die Ausnehmung (25, 25a bis 25l) in Form einer ganzzahlig axialsymmetrischen Vertiefung ausgebildet ist.

5. Mikroventil nach einem der Ansprüche 1 oder 2, dadurch gekennzeichnet, daß die Ausnehmung (25a) die Form eines flachen, sich zur offenen Seite aufweitenden Kegelstumpfes hat.

6. Mikroventil nach einem der Ansprüche 1 bis 5, dadurch gekennzeichnet, daß das Schließglied (31) und die Druckausgleichsfläche an einem Ventilteller (29, 29a bis 29l) ausgebildet sind.

7. Mikroventil nach Anspruch 6, dadurch gekennzeichnet, daß die vom Druck beaufschlagte Fläche der Membran (26, 26 a bis 26l) und die als Druckausgleichsfläche wirkende, vom Druck beaufschlagte Wirkfläche am Ventilteller (29, 29a bis 29l) so ausgebildet sind, daß sich die Kräfte und Momente aufgrund der an Membran und Druckausgleichsfläche wirkenden Drücke aufheben.

8. Mikroventil nach einem der Ansprüche 1 bis 7, dadurch gekennzeichnet, daß die Membran (26, 26a bis 26l) als Ringmembran ausgebildet ist.

9. Mikroventil nach einem der Ansprüche 1 bis 8, dadurch gekennzeichnet, daß das Schließglied (31) durch Ansteuern des elektrischen Betätigungsmittels von einem Ventilsitz (35) abgehoben und durch ein federndes Rückstellmittel (26, 26a bis 26l; 67) wieder zur Anlage an den Ventilsitz gebracht wird.

10. Mikroventil nach Anspruch 9, dadurch gekennzeichnet, daß das federnde Rückstellmittel die Membran (26, 26a bis 26l) ist.

11. Mikroventil nach Anspruch 9, dadurch gekennzeichnet, daß das federnde Rückstellmittel ein am Ventilteller (29, 29a bis g) angebrachtes Federelement (67) ist, das -andererseits an einem bei Ventilbetätigung ortsfesten Bauteil (13, 13a bis 13l) des Mikroventils befestigt ist.

12. Mikroventil nach einem der Ansprüche 1 bis 11, dadurch gekennzeichnet, daß das elektrische Betätigungsmittel eine elektrostatische Vorrichtung mit zwei Elektroden (17, 22) ist, von denen eine schichtförmig zumindest an der Unterseite (21) der Membran (26) ausgebildet ist.

13. Mikroventil nach Anspruch 12, dadurch gekennzeichnet, daß die zweite Elektrode schichtförmig auf die Oberseite eines Unterteils (11, 11a bis 11l) aufgebracht ist.

14. Mikroventil nach einem der Ansprüche 1 bis 11, dadurch gekennzeichnet, daß das elektrische Betätigungmittel eine piezoelektrische Beschichtung an der Unterseite der Membran (26, 26a bis 26l) ist.

15. Mikroventil nach einem der Ansprüche 1 bis 11, dadurch gekennzeichnet, daß das elektrische Betätigungsmittel eine elektromagnetische Vorrichtung ist, wobei die das Schließglied (31) und die Membran (26, 26a bis 26l) beinhaltende mittlere Schicht (12, 12a bis 12l) zumindest im Bereich der Membran ferromagnetisch ist und wobei weiterhin im Unterteil (11a bis 11l) eine Magnetspule (68) angeordnet ist.

16. Mikroventil nach einem der Ansprüche 12 bis 15, dadurch gekennzeichnet, daß die beiden Elektroden (17h bis 17l, 22 h bis 22l) der elektrostatischen Vorrichtung zumindestens als Teil der Mantelfläche eines Kegels ausgebildet sind.

17. Mikroventil nach einem der Ansprüche 12 bis 15, dadurch gekennzeichnet, daß die beiden Elektroden (17h bis 17l, 22h bis 22l) der elektrostatischen Vorrichtung zumindest als Teile der Mantelfläche einer Pyramide ausgebildet sind.

18. Ventilanordnung mit mindestens zwei parallel geschalteten Mikroventilen nach einem der Ansprüche 1 bis 17, wobei jedes der Mikroventile unabhängig ansteuerbar ist und das Unterteil (80) und/oder Oberteil (83) jeweils als gemeinsames Bauteil ausgeführt sind.

## Claims

1. Microvalve made of layers (11, 11a to 11l; 12, 12a to 12l; 13, 13a to 13l; 44, 6l, 61e) arranged one above the other and connected to one another, having at least two pressure-medium connections (14, 15; 38) for the feed and outlet, and having a valve seat (38, 35) connected between said connections, to which valve seat a closure member (31) is assigned which can be deflected by electric actuating means (17, 18, 22; 58), the closure member being firmly connected to a membrane (26, 26a to 26l) which is integrated in one of the layers (12, 12a to 12l) and adjoins a space (34) which is acted upon by pressure medium, and having a pressure-compensating surface (29) which acts counter to the pressurized membrane, characterized in that the closure member (31), the membrane (26, 26g) and the pressure-compensating surface (29f, 29g) are formed by a plastic moulding process, in particular injection moulding or embossing, in a two-layered plastic component (20f, 20g, 33f, 33g) which, when fitted together, is a middle layer of the microvalve and is tensioned by its outer, two-layered circumference.

2. Microvalve according to Claim 1, characterized in that the membrane (26, 26a to 26l) is formed by a cut-out (25, 25a to 25l) on the underside (21), facing away from the closure member (31), of the middle layer (12, 12a to 12l).

3. Microvalve according to Claim 2, characterized in that the cut-out (25, 25a to 25l) is designed in the form of a flat cylinder.

4. Microvalve according to Claim 2, characterized in that the cut-out (25, 25a to 25l) is designed in the form of an integral axisymmetrical depression.

5. Microvalve according to one of Claims 1 or 2, characterized in that the cut-out (25a) has the shape of a flat truncated cone which widens towards the open side.

6. Microvalve according to one of Claims 1 to 5, characterized in that the closure member (31) and the pressure-compensating surface are formed on a valve plate (29, 29a to 29l).

7. Microvalve according to Claim 6, characterized in that the surface of the membrane (26, 26 a to 26l) subjected to the pressure and the active surface acting as a pressure-compensating surface and subjected to the pressure are formed on the valve plate (29, 29a to 29l) in such a way that the forces and moments are eliminated due to the pressures acting on the membrane and the pressure-compensating surface.

8. Microvalve according to one of Claims 1 to 7, characterized in that the membrane (26, 26a to 26l) is designed as an annular membrane.

9. Microvalve according to one of Claims 1 to 8, characterized in that the closure member (31) is lifted up from a valve seat (35) by actuating the electrical actuating means and is brought to rest against the valve seat again by a resilient restoring means (26, 26a to 26l; 67).

10. Microvalve according to Claim 9, characterized in that the resilient restoring means is the membrane (26, 26a to 26l).

11. Microvalve according to Claim 9, characterized in that the resilient restoring means is a spring element (67) which is mounted on the valve plate (29, 29a to g) and is attached, on the other hand, to a component (13, 13a to 13l), of the microvalve, which is stationary when the valve is actuated.

12. Microvalve according to one of Claims 1 to 11, characterized in that the electrical actuating means is an electrostatic device having two electrodes (17, 22), one of which is designed in a layered manner, at least on the underside (21) of the membrane (26).

13. Microvalve according to Claim 12, characterized in that the second electrode is applied in a layered manner to the upper side of a bottom part (11, 11a to 11l).

14. Microvalve according to one of Claims 1 to 11, characterized in that the electrical actuating means is a piezoelectric coating on the underside of the membrane (26, 26a to 26l).

15. Microvalve according to one of Claims 1 to 11, characterized in that the electrical actuating means is an electromagnetic device, the middle layer (12, 12a to 12l) containing the closure member (31) and the membrane (26, 26a to 26l) being ferromagnetic, at least in the region of the membrane, and a magnetic coil (68) furthermore being arranged in the bottom part (11a to 11l).

16. Microvalve according to one of Claims 12 to 15, characterized in that the two electrodes (17h to 17l, 22h to 22l) of the electrostatic device are designed at least as part of the outer surface of a cone.

17. Microvalve according to one of Claims 12 to 15, characterized in that the two electrodes (17h to 17l, 22h to 22l) of the electrostatic device are designed at least as part of the outer surface of a pyramid.

18. Valve arrangement having at least two microvalves connected in parallel according to one of Claims 1 to 17, each of the microvalves being actuable independently, and the bottom part (80) and/or top part (83) being constructed in each case as a common component.

## Revendications

1. Micro-soupape formée de couches (11, 11a à 11l ; 12a à 12l ; 13, 13a à 13l ; 44, 61, 61e) reliées, superposées, comprenant :
• au moins deux branchements de fluide sous pression (14, 15 ; 38) pour l'alimentation et la sortie ainsi qu'un siège de soupape (38, 35) intermédiaire auquel est associé un organe obturateur (31) déplacé par un moyen d'actionnement électrique (17, 18, 22 ; 58),
• l'organe obturateur étant relié solidairement à une membrane (26, 26a à 26l) intégrée dans l'une des couches (12, 12a à 12l) et adjacente à un volume (34) exposé au fluide sous pression ainsi qu'une surface de compensation de pression (29) s'opposant à la membrane sollicitée en pression,
caractérisée en ce que
l'organe obturateur (31), la membrane (26, 26g) et les surfaces de compensation de pression (29l, 29g) sont réalisés par un procédé de mise en forme de matière plastique notamment d'injection ou de matriçage comme composants en matière plastique à deux couches (20f, 20g, 33f, 33g) qui à l'état réuni est une couche médiane de la micro-soupape, fixée avec sa périphérie extérieure à deux couches.

2. Micro-soupape selon la revendication 1,
caractérisée en ce que
la membrane (26, 26a à 26l) est réalisée par une cavité (25, 25a à 25l) dans la face inférieure (21) de la couche médiane (12, 12a à 12l), opposée à l'organe d'obturation (31).

3. Micro-soupape selon la revendication 2,
caractérisée en ce que
la cavité (25, 25a à 25l) est réalisée sous la forme d'un cylindre plat.

4. Micro-soupape selon la revendication 2,
caractérisée en ce que
la cavité (25, 25a à 25l) est réalisée sous la forme d'une cavité polygonale paire ayant une symétrie axiale.

5. Micro-soupape selon l'une quelconque des revendications 1 ou 2,
caractérisée en ce que
la cavité (25a) a la forme d'un tronc de cône plat, s'élargissant vers le côté ouvert.

6. Micro-soupape selon l'une des revendications 1 à 5,
caractérisée en ce que
l'organe d'obturation (31) et la surface de compensation de pression sont réalisés sur un plateau de soupape (29, 29a à 29l).

7. Micro-soupape selon la revendication 6,
caractérisée en ce que
la surface de la membrane (26, 26a à 26l) sollicitée par la pression et la surface active agissant comme surface de compensation de pression, qui est exposée à la pression sur le plateau de soupape (29, 29a à 29l) sont réalisées pour que les forces et les couples des pressions agissant sur la membrane et la surface de compensation de pression s'équilibrent.

8. Micro-soupape selon l'une des revendications 1 à 7,
caractérisée en ce que
la membrane (26, 26a à 26l) est une membrane annulaire.

9. Micro-soupape selon l'une des revendications 1 à 8,
caractérisée en ce que
l'organe d'obturation (31) est soulevé par la commande du moyen de manoeuvre électrique par rapport à un siège de soupape (35) et est remis en appui contre le siège de soupape par un moyen de rappel élastique (26, 26a à 26l, 67).

10. Micro-soupape selon la revendication 9,
caractérisée en ce que
le moyen de rappel élastique est la membrane (26, 26a à 26l).

11. Micro-soupape selon la revendication 9,
caractérisée en ce que
le moyen de rappel élastique est un élément à ressort (67) prévu sur le plateau de soupape (29, 29a à 29g) par ailleurs fixé à une pièce (13, 13a à 13l) de la micro-soupape qui est fixe lors de l'actionnement de la soupape.

12. Micro-soupape selon l'une des revendications 1 à 11,
caractérisée en ce que
le moyen d'actionnement électrique est un dispositif électrostatique à deux électrodes (17, 22) dont l'une est au moins en forme de couche prévue sur la face inférieure (21) de la membrane (26).

13. Micro-soupape selon la revendication 12,
caractérisée en ce que
la seconde électrode est en forme de couche appliquée sur la face supérieure d'une partie inférieure (11, 11a à 11l).

14. Micro-soupape selon l'une des revendications 1 à 11,
caractérisée en ce que
le moyen d'actionnement électrique est un revêtement piézo-électrique prévu sur la face inférieure de la membrane (26, 26a à 26l).

15. Micro-soupape selon l'une des revendications 1 à 11,
caractérisée en ce que
le moyen d'actionnement électrique est un dispositif électromagnétique, la couche médiane (12, 12a à 12l), comportant l'organe d'obturation (31) et la membrane (26, 26a à 26l) est ferromagnétique au moins au niveau de la membrane et en outre une bobine magnétique (66) est prévue dans la partie inférieure (11a à 11l).

16. Micro-soupape selon l'une des revendications 12 à 15,
caractérisée en ce que
les deux électrodes (17h à 17l, 22h à 22l) du dispositif électrostatique sont réalisées au moins comme parties de la surface-enveloppe d'un cône.

17. Micro-soupape selon l'une des revendications 12 à 15,
caractérisée en ce que
les deux électrodes (17h à 17l, 22h à 22l) du dispositif électrostatique sont au moins une partie de la surface-enveloppe d'une pyramide.

18. Dispositif à soupapes ayant au moins deux micro- soupapes branchées en parallèle selon l'une des revendications 1 à 17, chaque micro-soupape se commandant indépendamment et la partie inférieure (80) et/ou la partie supérieure (83) étant un composant commun.
